# EUROPEAN PATENT APPLICATION

(11) **EP 2 056 541 A1**
(43) Date of publication of application: **06.05.2009**
(21) Application number: 07021117.2
(22) Date of filing: 29.10.2007
(51) Int. Cl.: H04L 12/56

(54) **Method and device for enabling backward compatibility with high speed packet access modes**

(71) Applicant: Nokia Siemens Networks Oy, 02610 Espoo (FI)
(72) Inventor: Nakamata, Masatoshi, Kawasaki-shi, Kanagawa (JP); Wimmer, Markus, 50-335 Wroclaw (PL)
(74) Representative: Becker Kurig Straus

(57) **Abstract**

The present invention provides a mobile terminal, which includes a transceiver operable for receiving a resource control message through a code division multiple access technology based network from a first controlling network entity via a second controlling network entity. The second controlling network entity uses one or more high speed downlink channels for sending the resource control message to the mobile terminal. The mobile terminal further includes a component, which is operable for determining, whether the resource control message includes a temporary identity relating to an identity to be used with the one or more high speed downlink channels; and in case the temporary identity misses, reconfiguring the transceiver of the mobile terminal to listen on a physical control channel and to receive at least control information sent by the first controlling network entity on the physical control channel.

## Description

The present invention relates to a code division multiple access (CDMA) technology based communications system. In particular, the present invention relates to channel mapping in the code division multiple access (CDMA) technology based communications system.

With the introduction of the "enhanced Cell_FACH" functionality in the 3GPP (third Generation Partnership Project) Release 7 specification the usage of HSDPA and HSUPA as defined in the 3GPP (third Generation Partnership Project) Release 5 and 6 specifications is not longer limited to Cell_DCH connected state.

However, the extension of the use of HSDPA channels in Cell_FACH state, URA_PCH state and Cell_PCH state and the possibility of the co-existence of network controllers compatible with Pre-Release 7 specification and Release 7 specification introduces interoperability issues, in particular with respect to the Iur interface interfacing between network controllers of the radio access network.

According to an exemplary aspect of the present invention, a mobile terminal is provided. The mobile terminal includes a transceiver, which is operable for receiving a resource control message through a code division multiple access technology based network from a first controlling network entity via a second controlling network entity. The second controlling network entity uses one or more high speed downlink channels for sending the resource control message to the mobile terminal. The mobile terminal further includes a component, which is operable for determining, whether the resource control message includes a temporary identity relating to an identity to be used with the one or more high speed downlink channels; and in case the temporary identity misses, reconfiguring the transceiver of the mobile terminal to listen on a physical control channel and to receive at least control information sent by the first controlling network entity on the physical control channel.

According to another exemplary aspect of the present invention, a controlling network entity is provided. The controlling network entity includes a component, which is operable for generating the resource control message. A temporary identity relating to an identity to be used with the one or more high speed downlink channels is included into the resource control message if the controlling network entity supports one or more high speed downlink channels for sending the resource control message to a mobile terminal; and the temporary identity is omitted if the controlling network entity does not supports the one or more high speed downlink channels. The controlling network entity further includes a network interface, which is operable for sending a resource control message through a code division multiple access technology based network via another controlling network entity to the mobile terminal. The other controlling network entity uses the one or more high speed downlink channels for sending the resource control message to the mobile terminal.

According to another exemplary aspect of the present invention, a method for operating a mobile terminal is provided. A resource control message is received through a code division multiple access technology based network from a first controlling network entity via a second controlling network entity by a mobile terminal. The second controlling network entity uses one or more high speed downlink channels for sending the resource control message to the mobile terminal. It is determined whether the resource control message includes a temporary identity relating to an identity to be used with the one or more high speed downlink channels. In case the temporary identity misses, the mobile terminal is reconfigured to listen on a physical control channel and to receive at least control information sent by the first controlling network entity on the physical control channel.

According to an exemplary embodiment of the present invention, in case the temporary identity is included, the mobile terminal is maintained to listen on the one or more high speed download channels using the temporary identity.

According to an exemplary embodiment of the present invention, a change of a connected state of the mobile terminal to Cell_FACH state is performed or the connected state of the mobile terminal in Cell_FACH state is maintained.

According to an exemplary embodiment of the present invention, a confirmation response is transmitted to the first controlling network entity.

According to an exemplary embodiment of the present invention, the mobile terminal is clamped on the second controlling network entity.

According to an exemplary embodiment of the present invention, the resource control message originates from the first controlling network entity.

According to an exemplary embodiment of the present invention, the first controlling network entity and/or the second controlling network entity manage radio resources of the code division multiple access technology based network.

According to an exemplary embodiment of the present invention, the resource control message includes at least one of a "cell update confirm" message and a "reconfiguration" message.

According to another exemplary aspect of the present invention, a method of operating a controlling network entity is provided. The resource control message is generated. A temporary identity relating to an identity to be used with the one or more high speed downlink channels is included into the resource control message if the controlling network entity supports one or more high speed downlink channels for sending the resource control message to the mobile terminal; and the temporary identity is omitted if the controlling network entity does not supports the one or more high speed downlink channels. The resource control message is sent through a code division multiple access technology based network via another controlling network entity to a mobile terminal. The other controlling network entity uses the one or more high speed downlink channels for sending the resource control message to the mobile terminal.

According to an exemplary embodiment of the present invention, the mobile terminal is ordered to change its connected state by the resource control message in Cell_FACH state, or the connected state of mobile terminal is maintained in Cell_FACH state.

According to an exemplary embodiment of the present invention, the controlling network entity and/or the other controlling network entity are radio network controllers.

According to an exemplary embodiment of the present invention, the mobile terminal is anchored to the controlling network entity.

According to an exemplary embodiment of the present invention, the controlling network entity is a serving controlling network entity and/or the other controlling network entity is a drift controlling network entity.

According to another exemplary aspect of the present invention, a computer program product is provided, which comprises program code sections, which when run on a processing enabled apparatus carry out the any of the aforementioned methods.

According to another exemplary aspect of the present invention, a computer program product is provided, which comprises program code sections stored on a computer-readable or machine readable medium, wherein the program code sections when run on a processing enabled apparatus carry out the any of the aforementioned methods.

According to another exemplary aspect of the present invention, a system is provided, which comprises a code division multiple access technology based network; a first network controlling entity and a mobile terminal.

The first network controlling entity has a component, which is operable for generating a resource control message. A temporary identity relating to an identity to be used with the one or more high speed downlink channels is included into the resource control message if the second controlling network entity supports one or more high speed downlink channels for sending the resource control message to a mobile terminal; and the temporary identity is omitted if the controlling network entity supports only a physical control channel for sending the resource control message to the mobile terminal. The first network controlling entity has further a network interface, which is operable for sending the resource control message through a code division multiple access technology based network via a second controlling network entity to a mobile terminal. The other controlling network entity uses one or more high speed downlink channels for sending the resource control message to the mobile terminal.

The terminal device has a transceiver operable for receiving the resource control message through the code division multiple access technology based network from the first controlling network entity via the second controlling network entity.
The terminal device has further a component, which is operable for determining, whether the resource control message includes the temporary identity; and in case the temporary identity misses, the transceiver of the mobile terminal is reconfigured to listen on a physical control channel and to receive at least control information sent by the first controlling network entity on the physical control channel.

These and other additional objects and features of the present invention will become readily apparent when the same are set forth in greater detail in the accompanying detailed description of the embodiments with reference being made to the drawings in which like reference numerals represent like or similar parts throughout and in which:
- Fig. 1: illustrates schematically a public land mobile network (PLMN) according to an exemplary embodiment of the present invention;
- Fig. 2: illustrates schematically an exemplary architecture of the radio interface protocol according to an exemplary embodiment of the present invention;
- Fig. 3: illustrates schematically a possible mapping between the logical channels and the transport channels from the perspective of a mobile terminal according to an exemplary embodiment of the present invention;
- Fig. 4: an exemplary mapping between the logical channels and the transport channels from the perspective of a radio access network according to an exemplary embodiment of the present invention;
- Fig. 5: illustrates schematically an exemplary diagram of transitions between modes and states of a mobile terminal according to an exemplary embodiment of the present invention;
- Fig. 6: illustrates schematically a public land mobile network environment soft handover procedure of a operable with the mobile terminal in a PLMN from the radio access network's point of view according to an exemplary embodiment of the present invention;
- Fig. 7: illustrates schematically a flow diagram illustrating connected state transition procedure from Cell_DCH to Cell_FACH a radio link additionprocedure in an inter network controller soft handover procedure according to a first exemplary embodiment of the present invention;
- Fig. 8: illustrates schematically a flow diagram illustrating a radio link addition procedure in an inter network controller soft handover procedure cell update procedure according to a second exemplary embodiment of the present invention; and
- Figs. 9 to 1112: illustrate schematically a chart diagram illustrating schematically decision flow according to an exemplary embodiment of the present invention; and.
- Fig. 13: illustrates schematically a block diagram of a mobile terminal according to an exemplary embodiment of the present invention; and
- Fig. 14: illustrates a block diagram of a radio access network according to an exemplary embodiment of the present invention.

The following embodiments are described in sufficient detail to enable those skilled in the art to practice the invention, and it is to be understood that the embodiments may be combined, or that other embodiments may be utilized and that structural, logical, and electrical changes may be made without departing from the spirit and scope of the present invention. It should be noted that references to "an", "one", or "various" embodiments in this document are not necessarily to the same embodiment, and such references contemplate more than one embodiment.

This document discusses, among other things, code division multiple access (CDMA) technology based communications systems. In particular, the operation of the code division multiple access (CDMA) technology based communications systems will be described in more detail. The code division multiple access (CDMA) technology based communications systems according to exemplary embodiments of the present invention may be used to implement mobile or cellular communications systems. For the sake of illustration and feasibility of the invention, exemplary references to wideband code division multiple access (WCDMA) communications systems and in particular universal mobile telecommunications systems (UMTS) will be made. These communications system should be understood as being included in the general code division multiple access (CDMA) technology based communications systems, on the basis of which the present invention can be carried out. This is it should be understood that the present invention is not limited to any specific implementation of a mobile or cellular communications system or public land mobile network (PLMN). Within the scope and principles of the invention, the concept may be implemented with similar, equivalent, and/or future communications systems.

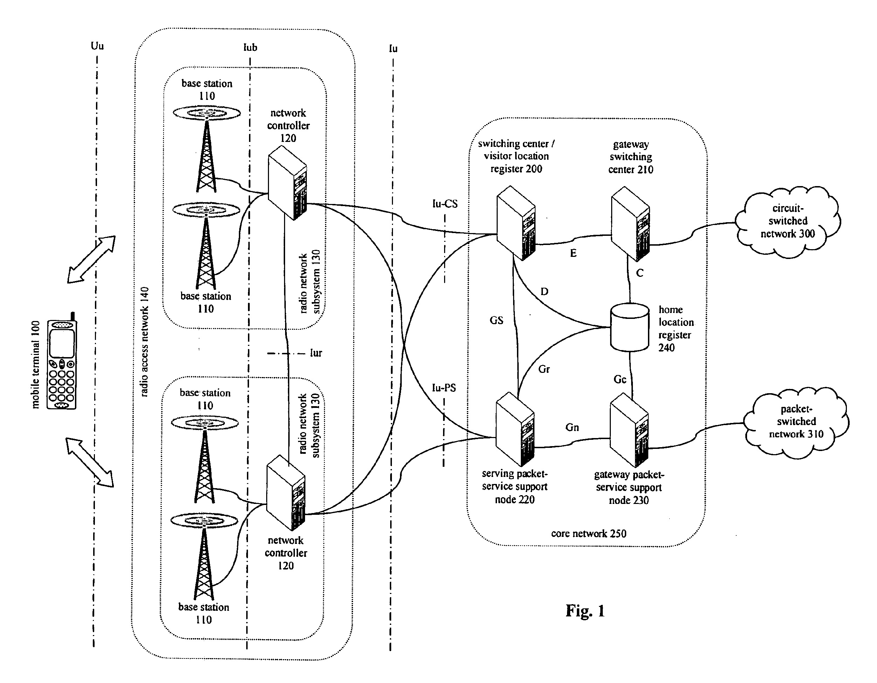

An exemplary schematic structure of a conventional code division multiple access (CDMA) communications technology based network such as a wideband code division multiple access (WCDMA) communication network including in particular universal mobile telecommunications system (UMTS) is illustrated in Fig. 1.

A mobile terminal (MT) 100, mobile station (MS) or user equipment (UE), is connected to a core network 250 through a terrestrial radio access network (RAN) 140. The radio access network 140 configures, maintains and manages a radio access bearer for radio frequency communications between the mobile terminal 100 and core network 250 to meet end-to-end quality-of-service requirements.

The radio access network 140 comprises at least one radio network subsystem 130, including a network controller 120 acting as an access point to the core network 250, and at least one base station 110 or node B managed by aan associated network controller 120. The network controllers 120 are logically classified as controlling network controllers, which allocate and manage common radio resources for a plurality of mobile terminals 100 of a cell covered by a base station 110, and serving network controllers, which allocate and manage dedicated radio resources for a specific mobile terminal 100 of a cell. Each base station 110 manages at least one cell.

The core network 250 may be structured and divided in accordance with a type of service provided including for instance a circuit-switched (CS) domain and a packet-switched (PS) domain. For example, a general voice conversation service is conventionally a circuit switched (CS) service, while a Web browsing service via an Internet connection is classified as a packet switched (PS) service.

The circuit-switched domain includes a switching center 200 or mobile switching center (MSC) acting as an access point to the radio access network 140 and a gateway switching center 210 or gateway mobile switching center (GMSC) acting as an access point to an external network 300. The packet-switched domain includes a serving packet-service support node 220 or serving general packet radio service support node (SGSN) acting as an access point to the radio access network 140 and a gateway packet-service support node 230 or gateway general packet radio service support node (GGSN) acting as an access point to the external network 310. A registers 200, 240 including for instance visitor location register (VLR) and a home location register (HLR) manage user registration information.

In the CS domain, the access point of the core network 250 is the switching center 200 via an Iu-CS interface. For supporting circuit switched services, the network controllers 120 are connected to the switching center 200 of the core network 250 and the switching center 200 is connected to the gateway switching center 210 that manages the connection with other networks, in particular the other circuit-switched networks 300.

In the PS domain, the access point of the core network 250 is the serving packet-service support node 220 via an Iu-PS interface. For supporting packet switched services, the network controllers 120 are connected to the serving packet-service support node 220 and the gateway packet-service support node 230 of the core network 250. The serving packet-service support node 220 supports the packet communications with the network controllers 120 and the gateway packet-service support node 230 manages the connection with other networks, in particular the other packet switched networks 310 such as the Internet.

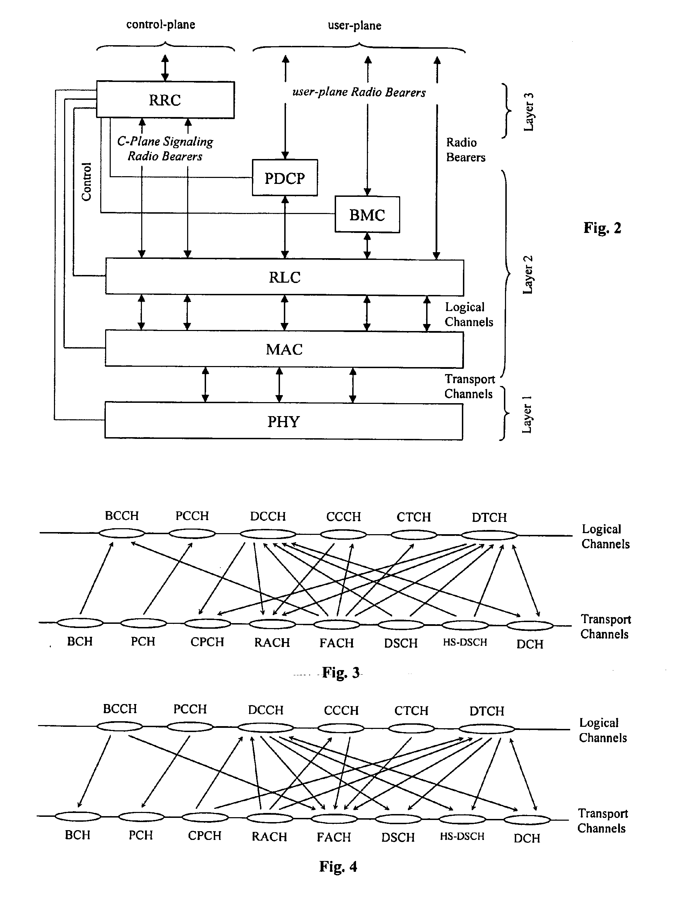

The interface between the mobile terminal 100 and radio access network 140 is realized through a radio interface protocol may for instance be established in accordance with 3GPP radio access network specifications. An exemplary architecture of the radio interface protocol is illustrated in Fig. 2.

As illustrated in Fig. 2, the exemplary radio interface protocol is logically structured into horizontal layers comprising a physical layer (L1), a data link layer (L2), and a network layer (L3), and vertical planes comprising a user plane (U-plane) for transmitting user data and a control plane (C-plane) for transmitting control information. The user plane is a region that handles traffic information with the user, such as voice or Internet protocol (IP) packets. The control plane is a region that handles control information for an interface with a network and maintenance and management of a call.

The protocol layers may be divided into a first layer (L1), a second layer (L2), and a third layer (L3) based on the three lower layers of an open system interconnection (OSI) standard model. The first layer (L1) is the physical layer (PHY). The second layer (L2) includes a medium access control (MAC) layer, a radio link control (RLC) layer, a broadcast/multicast control (BMC) layer, and a packet data convergence protocol (PDCP) layer.

The physical (PHY) layer provides information transfer service to a higher layer by using various radio transfer techniques. The physical layer is linked via transport channels to a medium access control (MAC) layer.

The medium access control (MAC) layer handles mapping between logical channels and transport channels and provides allocation of the medium access control (MAC) parameters for allocation and re-allocation of radio resources. The medium access control (MAC) layer is connected to the physical layer by transport channels and may be divided into sub-layers including for instance a MAC-b sub-layer, a MAC-d sub-layer, a MAC-c/sh sub-layer, and a MAC-hs sub-layer in accordance with a type of transport channel being managed.

The medium access control (MAC) layer is connected to an upper layer called the radio link control (RLC) layer, via logical channels. Various logical channels are provided according to the type of information transmitted. In general, a control channel is used to transmit information of the control plane and a traffic channel is used to transmit information of the user plane.

A logical channel may be a common channel or a dedicated channel depending on whether the logical channel is shared. Logical channels include for instance a dedicated traffic channel (DTCH), a dedicated control channel (DCCH), a common traffic channel (CTCH), a common control channel (CCCH), a broadcast control channel (BCCH), and a paging control channel (PCCH), or a shared channel control channel (SHCCH). The broadcast control channel (BCCH) provides information including information utilized by a mobile terminal 100 to access the core network 250. The paging control channel (PCCH) is used by the radio access network 140 to access a mobile terminal 100.

For instance the MAC-b sub-layer may manage a broadcast channel (BCH), which is a transport channel handling the broadcasting of system information. In the downlink, the MAC-c/sh sub-layer may manage a common transport channel, such as a forward access channel (FACH) or a downlink shared channel (DSCH), which is shared by a plurality of mobile terminals. In the uplink, the MAC-c/sh sub-layer may manage a radio access channel (RACH). Therefore, each mobile terminal 100 has one MAC-c/sh entity.

A possible mapping between the logical channels and the transport channels from the perspective of a mobile terminal 100, i.e. in uplink direction, is illustrated in Fig. 3. The possible mapping between the logical channels and the transport channels from the perspective of a radio access network 140, i.e. in downlink direction, is illustrated in Fig. 4.

For instance, the MAC-d sub-layer may manage a dedicated channel (DCH), which is a dedicated transport channel for a mobile terminal 100. The MAC-d sub-layer may be located in a serving network controller 10 that manages a corresponding mobile terminal 100, and one MAC-d sub-layer may also exist in each mobile terminal 100.

The radio link control layer, depending of the radio link control mode of operation, supports reliable data transmissions and performs segmentation and concatenation on a plurality of radio link control service data units (RCL SDUs) delivered from an upper layer. When the radio link control layer receives the RLC SDUs from the upper layer, the radio link control layer adjusts the size of each RLC SDU in an appropriate manner based upon processing capacity and then creates data units by adding header information thereto.

The data units, called protocol data units (PDUs), are transferred to the medium access control (MAC) layer via a logical channel. The radio link control layer includes a buffer for storing the RLC SDUs and/or the RLC PDUs. The radio link control services are used by service-specific protocol layers on the user plane, namely a broadcast/multicast control (BMC) protocol and a packet data convergence protocol (PDCP), and are used by a radio resource control (RRC) layer for signaling transport on the control plane.

The broadcast/multicast control layer schedules a cell broadcast (CB) message delivered from the core network 250 and enables the cell broadcast message to be broadcast to the corresponding mobile terminal 100 in the appropriate cell. Header information, such as a message identifier, a serial number, and a coding scheme, is added to the cell broadcast message to generate a broadcast/multicast control message for delivery to the radio link control layer.

The radio link control layer appends RLC header information and transmits the thus formed message to the medium access control (MAC) layer via a common traffic channel as a logical channel. The medium access control (MAC) layer maps the common traffic channel to a forward access channel (FACH) as a transport channel. The transport channel is mapped to a secondary common control physical channel (S-CCPCH) as a physical channel.

The packet data convergence protocol layer is located above the radio link control layer. The packet data convergence protocol layer is used to transmit network protocol data, such as the IPv4 or IPv6, effectively on a radio interface with a relatively small bandwidth. For this purpose, the packet data convergence protocol layer reduces unnecessary control information used in a wired network, a function called header compression.

The radio resource control (RRC) layer located at the lowest portion of the third layer (L3) is only defined in the control plane. The radio resource control layer handles the control plane signaling of the network layer (L3) between the mobile terminal 100 and the radio access network 140 and controls the transport and physical channels for the establishment, reconfiguration, and release of radio bearers. A radio bearer is a service provided by a lower layer, such as the radio link control layer or medium access control (MAC) layer, for data transfer between the mobile terminal 100 and radio access network 140.

The air interface (Uu) between the mobile terminal 100 and the radio access network 140 includes the radio resource control layer for the establishment, reconfiguration, and release of radio bearers, for example a service providing data transfer between the mobile terminal 100 and an network controller 12010 of the radio access network 140. Establishment of a radio bearer determines the regulating characteristics of the protocol la yer and channel needed to provide a specific service, thereby establishing the parameters and operational methods of the service.

A mobile terminal 100 is said to be in the RRC-connected mode when the radio resource control layer of a mobile terminal and the radio resource control layer of a corresponding network controller 120 are connected, thereby providing for bi-directional transfer of radio resource control messages. If there is no radio resource control connection, the mobile terminal 100 is said to be in the RRC-idle mode.

Upon power-up, a mobile terminal 100 is in the RRC-idle mode by default. When necessary, an RRC-idle mobile terminal 100 transitions to the RRC-connected mode through a radio resource control connection procedure.

A radio resource control connection is established, for example, when uplink data transfer is needed to make a call or to respond to a paging message from the network controller 120. The radio resource control connection connects the mobile terminal 100 to the network controller 120 of the radio access network 140.

The different possibilities that exist for the mapping between the radio bearers and the transport channels may not be all possible all the time. The mobile terminal 100 and radio access network 140 deduce the possible mapping depending on the state of the mobile terminal 100 and the procedure that the mobile terminal and radio access network 140 are executing.

The different transport channels are mapped onto different physical channels. For example, the random access transport channel (RACH) is mapped on a given physical random access channel (PRACH), the dedicated channel transport channel (DCH) may be mapped on the dedicated physical channel (DPCH), the forward access transport channel (FACH) and the paging transport channel (PCH) may be mapped on the secondary common control physical channel (S-CCPCH), and the downlink shared transport channel (DSCH) is mapped on the physical downlink shared channel (PDSCH). The configuration of the physical channels is determined by radio resource control signaling exchange between the network controller 120 and the mobile terminal 100.

Because a radio resource control connection exists for mobile terminals in radio resource control connected mode, the radio access network 140 can determine the existence of a particular mobile terminal 100 within the unit of cells, for example in which cell or set of cells the radio resource control connected mode mobile terminal currently resides, and which physical channel the mobile terminal is monitoring. Therefore, the mobile terminal can be effectively controlled.

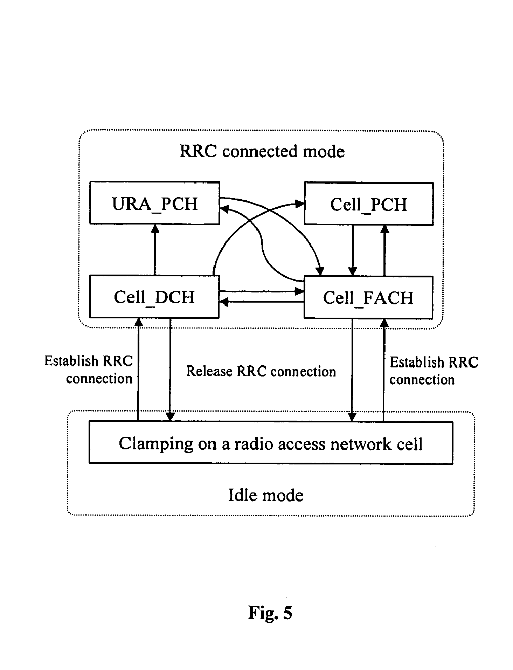

In contrast, the radio access network 140 cannot determine the existence of a mobile terminal 100 in idle mode. The existence of idle mobile terminal can only be determined by the core network 250 to be within a region that is larger than a cell, for example a location or a routing area. Therefore, the existence of idle mode mobile terminal is determined within large regions, and, in order to receive mobile communication services such as voice or data, the idle mode mobile terminal must transition into the radio resource control connected mode. An exemplary diagram of transitions between modes and states of a mobile terminal are schematically illustrated in FIG. 5.

In the idle mode, after the mobile terminal 100 is switched on, it selects (either automatically or manually) a public land mobile network (PLMN) to contact. The mobile terminal 100 looks for a suitable cell of the chosen public land mobile network (PLMN), chooses that cell to provide available services, and tunes to its control channel. This choosing is known as "camping on a cell". After camping on a cell in idle mode, the mobile terminal 100 is able to receive system information and cell broadcast (CB) messages. The mobile terminal 100 stays in idle mode until it transmits a request to establish a radio resource control connection.

In the Cell_DCH state, a dedicated physical channel is allocated to the mobile terminal 100 and the mobile terminal 100 is known by its serving network controller 120 on a cell or active set level. The mobile terminal 100 performs measurements and sends measurement reports according to measurement control information received from network controller 120. The downlink shared transport channel (DSCH) ma y be used in this state, and mobile terminal 100 may also able to monitor the forward access transport channel (FACH) for system information messages.

In the Cell_FACH state, no dedicated physical channel is allocated for the mobile terminal 100, but random access transport channels (RACHs) and forward access transport channels (FACHs) are used instead, for transmitting both signaling messages and small amounts of user-plane data. In this state the mobile terminal is also capable of listening to the broadcast transport channel (BCH) to acquire system information. The common packet transport channel (CPCH) can also be used when e.g. instructed by radio access network 140.

In this state the mobile terminal may perform cell reselections, and after a reselection may send a Cell Update message to the radio access network 140, so that the radio access network 140 knows the location of the mobile terminal 100 on a cell level.

In order to distinguish transmissions between the network controllers and different mobile terminals and in order to distinguish the different radio bearers that may be multiplexed in the medium access control (MAC) layer, the medium access control (MAC) includes a header in the transmissions. The logical channel type determines the type of medium access control (MAC) header that the mobile terminal uses to transmit the message and the transport channel to which the logical channel is mapped. This header may include an identifier that identifies a specific mobile terminal.

There are different identifiers used in the medium access control (MAC) header to distinguish transmissions to/from the different mobile terminals. The network controller allocates the different identifiers.

Examples of identifiers are a temporary identify relating to the cell of the radio access network (C-RNTI), temporary identify relating to the radio access network system (U-RNTI), temporary identify relating to the serving network controller of the radio access network (S-RNTI) and temporary identify relating to the high speed downlink packet access service of the communications network (H-RNTI). The C-RNTI is used to identify a given mobile terminal 100 in a given cell. The U-RNTI is used to identify a mobile terminal 100 in a given radio access network system. The S-RNTI is used to identifyies a given the mobile terminal 100 to the serving network controlleron a downlink shared transport channel (DSCH). The H-RNTI identifies the mobile terminal 100 on a given high speed downlink packet access (HSDPA) transport channel.

In the Cell_PCH state, the mobile terminal 100 is still known on a cell level in serving network controller 120, but it can be reached only via the paging channel (PCH). In this state the battery consumption of the mobile terminal 100 is less than in the Cell_FACH state, since the monitoring of the paging channel (PCH) includes a discontinuous reception (DRX) functionality.

The mobile terminal 100 also listens to system information on broadcast transport channel (BCH). A mobile terminal 100 supporting the cell broadcast service (CBS) is also capable of receiving broadcast/multicast control protocol (BMC) messages in this state. If the mobile terminal 100 performs a cell reselection, then it moves autonomously to the Cell_FACH state to execute the cell update procedure, after which it re-enters the Cell_PCH state if no other activity is triggered during the cell update procedure. If a new cell is selected from another radio access system, then the random accessradio resource control (RRC) network state is changed to idle mode and access to the other system is performed according to that system's specifications.

The URA_PCH state is similar to the Cell_PCH state, except that the mobile terminal 100 does not execute cell update procedure after each cell reselection, but instead reads random universal terrestrial access network registration area (URA) identities from the broadcast transport channel (BCH), and only if the random universal terrestrial access network registration area (URAN) changes does the mobile terminal 100 inform its location to the serving network controller 120. This is achieved with the URA update procedure. One cell can belong to one or many universal terrestrial random access network registration areas (URAs), and only if the UE cannot find its latest universal terrestrial random access network registration area (URA) identification from the list of universal terrestrial random access network registration areas (URAs) in a cell the mobile terminal executes the URA update procedure.

The UE leaves the connected mode and returns to idle mode when the RRC connection is released or at RRC connection failure.

### Enhanced CELLCell_FACH State

The aforementioned radio resources control connected modes have been introduced into the release 99 specification in the 3GPP (Third Generation Partnership Project) standardization. They are characterized by the channels the UE may receive or transmit and the tasks the UE has to carry out. As of 3GPP (Third Generation Partnership Project) release 99 specification, the logical channels dedicated control channel (DCCH) and dedicated traffic channel (DTCH) are only available in CELLCell_DCH and CELLCell_FACH states (or connected modes).

The usage of the high speed access including high speed downlink packet access (HSDPA) and high speed uplink packet access (HSUPA) as defined in 3GPP (Third Generation Partnership Project) release 5 and release 6 specifications, respectively, has only been possible in CELLCell_DCH state (or connected mode).

The work on "Enhanced enhanced CELLCell_FACH state" in 3GPP (Third Generation Partnership Project) release 7 specification extends the usage of high speed downlink packet access (HSDPA) to CELLCell_FACH state (or connected mode), URA_PCH state, and CELLCell_PCH state.

CELLCell_FACH state of 3GPP (Third Generation Partnership Project) release 99 specification utilizes forward access channel (FACH) mapped on secondary common control physical channel (S-CCPCH) for transmission of small downlink data packets.

Due to its limited control channel overhead, CELLCell_FACH state is optimum for "always on" type of services which introduce frequent but small packets to be transmitted to the mobile terminal 100. Being able to use the high speed downlink shared channel (HS-DSCH) on uplink high speed dedicated physical control channel (HS-PDSCH) in CELLCell_FACH state (or connected mode) has a lot of benefits. Furthermore, the benefits of transmitting on high speed downlink shared channel (HS-DSCH) become also available for CELLCell_PCH and URA_PCH states. This reduces signaling delays. Furthermore the possibility to transmit user data via high speed downlink shared channel (HS-DSCH) in CELLCell_PCH state is introduced.

The following table provides an overview on the logical channels that may be transmitted on high speed downlink shared channel (HS-DSCH) in the different states.

| | Cell_FACH | Cell_PCH | URA_PCH |
|---|---|---|---|
| DCCH/DTCH | X | X | - |
| BCCH | X | X | - |
| PCCH | - | X | X |
| CCCH | X | - | - |

### Enhanced paging procedure with HS-DSCH

An enhanced paging procedure is introduced in 3GPP (Third Generation Partnership Project) release 7 specification in order to leverage high speed downlink shared channel (HS-DSCH) usage for paging and reduce latency. Operation of high speed downlink shared channel (HS-DSCH) in CELLCell_PCH and URA_PCH states is defined as follows. It relates to reception of paging messages on paging channel (PCCH) in CELLCell_PCH and URA_PCH states, but the basic mechanism is also re-used for reception of other logical channels in CELLCell_PCH state.

The enhanced paging procedure is still based on paging occasions and monitoring of paging indicator channel (PICH). Paging indicator channel (PICH) will be used to alert the UE in CELLCell_PCH/URA_PCH that a paging channel (PCCH) paging message or another logical channel is going to be transmitted on the high speed downlink shared channel (HS-DSCH).

The UE can find a list of paging indicator channels (PICHs) in high speed downlink shared channel (HS-DSCH) paging system information in system information block types 5/5bis, and will select a specific paging indicator channel (PICH) according to a pre-defined rule based on U-RNTI (UTRAN (UMTS radio access network) radio network temporary identity). The mobile terminal 100 then monitors this selected paging indicator channel (PICH) in discontinuous reception (DRX) operation. Basically, the paging indicator channel (PICH) is shared between conventional paging and high speed downlink packet access (HSDPA) purposes. The PICH channels listed in high speed downlink shared channel (HS-DSCH) paging system information may actually point to the same physical channel as legacy ones.

### User data on HS-DSCH in Enhanced CELLCell_FACH state

User data transfer on high speed downlink shared channel (HS-DSCH) is possible in CELLCell_FACH state. In CELLCell_FACH state, the mobile terminal 100 performs continuous reception of the high speed shared control channel (HS-SCCH).

The configuration of high speed downlink shared channel (HS-DSCH) in CELLCell_FACH state is provided in high speed downlink shared channel (HS-DSCH) common system information via system information block type 5/5bis. This information is also used when the mobile terminal 100 is entering connected mode from idle mode by sending a RRC connection request message. The mobile terminal 100 will start listening to the high speed shared control channel(s) (HS-SCCH(s)) indicated in high speed downlink shared channel (HS-DSCH) common system information, based on a common H-RNTI (high speed downlink packet access (HSDPA) radio network temporary identity). A list of common H-RNTIs is provided by high speed downlink shared channel (HS-DSCH) common system information, and the common H-RNTI to use is selected by the mobile terminal 100 based on a predefined rule containing U-RNTI.

After detecting the high speed shared control channel (HS-SCCH) with common H-RNTI, the mobile terminal 100 starts reception of the corresponding uplink high speed downlink dedicated physical control channel(s) (HS-PDSCH(s)) containing common control (logical) channel (CCCH).

When the mobile terminal 100 has been configured with an H-RNTI, it is being addressed via this identifier on high speed shared control channel (HS-SCCH) in CELLCell_FACH state.

### BCCH reception in Enhanced CELLCell_FACH state

System information and system information change indication messages can be sent on secondary common control physical channel (S-CCPCH) in CELLCell_FACH state. In order to avoid that a mobile terminal has to simultaneously receive high speed downlink shared channel (HS-DSCH) and secondary common control physical channel (S-CCPCH) in order to learn about modifications of system information, support of broadcast channel (BCCH) transmission via high speed downlink shared channel (HS-DSCH) has been introduced as well. Users in CELLCell_FACH state may have been configured with a dedicated H-RNTI and are able to receive dedicated data on high speed downlink shared channel (HS-DSCH). Other users are only receiving data on common channels based on a common H-RNTI, as outlined above. Both users with and without dedicated H-RNTI must be able to receive broadcast channel (BCCH) data. In order to avoid that broadcast channel (BCCH) data has to be transmitted using the H-RNTIs of all mobile terminals in CELLCell_FACH, causing high load, a broadcast channel (BCCH) specific H-RNTI has been introduced to notify all mobile terminals in CELLCell_FACH that the broadcast channel (BCCH) information is transmitted.

The broadcast channel (BCCH) specific H-RNTI is provided by high speed downlink shared channel (HS-DSCH) common system information. The broadcast channel (BCCH) is then received by listening to the first indexed high speed shared control channel (HS-SCCH) code listed in high speed downlink shared channel (HS-DSCH) common system information. As soon as mobile terminal is being addressed by the broadcast channel (BCCH) specific H-RNTI on this high speed shared control channel (HS-SCCH), the mobile terminal 100 will switch to the associated high speed downlink shared channel (HS-DSCH) and receive broadcast channel (BCCH) including the "system information change indication" message with broadcast channel (BCCH) modification info.

This mechanism is valid for CELLCell_FACH state and for CELLCell_PCH state in case mobile terminal is configured with a dedicated H-RNTI. The base station will avoid mixing broadcast channel (BCCH) modification info and any other CELLCell_FACH data within the same transmission time interval.

Code division multiple access (CDMA) based communications system such as wideband code division multiple access (WCDMA) communications system including in particular universal mobile telecommunications system (UMTS) offer at the radio air interface improved connection maintenance during handover with the usage of transmit diversity techniques. If a mobile terminal has to change the cell, an additional radio link to the new base station may be established and the connection is transferred into soft handover (SHO). In UMTS, up to six links can be in operation simultaneously by adding them to the active set.

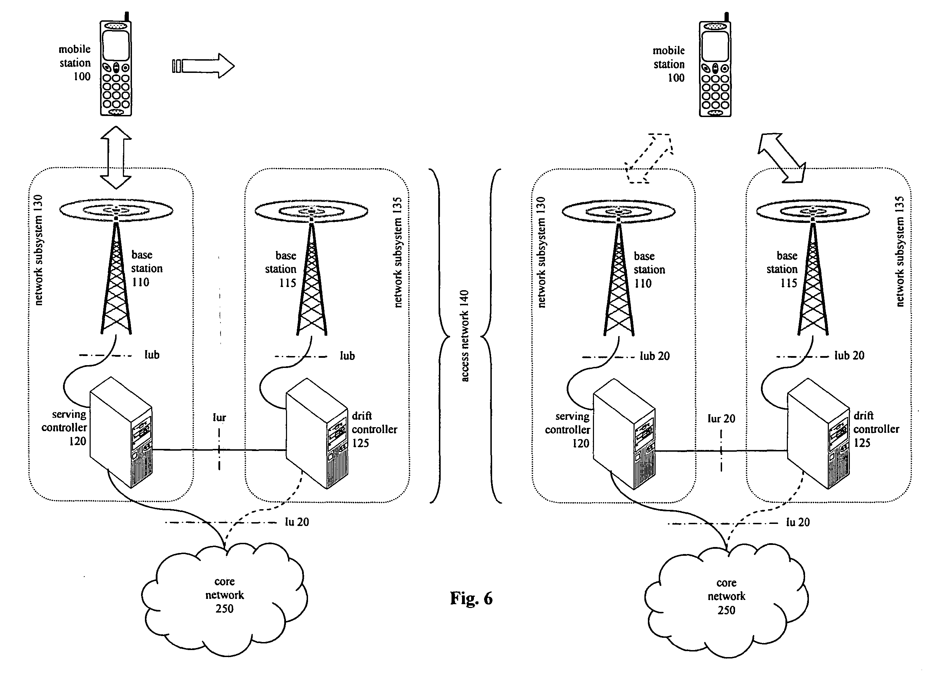

Fig. 6 schematically illustrates an exemplary block diagram of a public land mobile network environment operable with the mobile terminal a soft handover from the radio access network's point of view.
The soft handover can either be an intra network controller handover or an inter network controller handover as exemplarily illustrated in Fig. 6. In both cases the involved sectors belong to different cells and macro diversity is provided by the network controller. The data has to be duplicated by the network controller and is then routed to the appropriate base station. In intra network controller handover this can be done directly via the Iub interfaces.

In inter network controller handover the serving network controller (SRNC) 120 has to send the data via the Iur interface to the drift network controller (DRNC) 125, which in turn sends it to the base station 115 via its Iub interface. In uplink, selection combining on frame basis at the serving network controller (SRNC) 120 may be performed, while in downlink Rake reception at the UE may be conducted.

In order to add another radio link to the active set, the so-called reporting event has to be triggered including for instance the reception level of the common pilot channel (CPICH) as the decision measure.

The SRNC may request radio resources by sending a "radio link setup request" message to the drift network controller (DRNC) 125 A new Iur signaling connection has to be established if this is the first radio link via this drift network controller (DRNC) 125 to this mobile terminal 100. After establishing the Iur signaling connection, it will be used for all further signaling related to this mobile terminal 100. The radio bearer parameters and physical channel settings are signaled to the drift network controller (DRNC) 125. If radio resources are available, the drift network controller (DRNC) 125 sends the base station 115 a "radio link setup request" message to the base station 115. The reception of uplink transmission at the base station 115 starts. If the resources have been allocated successfully at the base station 115, a "radio link setup response" message is sent to the drift network controller (DRNC) 125 with parameters for transport bearer(s). The drift network controller (DRNC) 125 sends a "radio link setup response" message to the serving network controller (SRNC) 120, which describes the established transport layer connection. The serving network controller (SRNC) 120 initiates the setup of the Iur/Iub data transport bearer. This request includes the binding identity to bind the Iub data transport bearer to the dedicated channel (DCH). This may be repeated for each Iur/Iub data transport bearer to be setup.

When the Node B achieves uplink synchronization on the Uu interface, it notifies the drift network controller (DRNC) 125 with a "radio link restore indication" message. In its turn the drift network controller (DRNC) 125 notifies the serving network controller (SRNC) 120 with a radio link restore indication" message.

By exchanging the DCH frame protocol (DCH-FP) messages downlink synchronization and uplink synchronization the base station 115 and serving network controller (SRNC) 120 establish the synchronism for the data transport bearer(s) relative to already existing radio link(s). The base station 115 starts with the transmission in downlink.

The RRC "active set update (Radio Link Addition)" message is sent to the mobile terminal. The serving network controller (SRNC) 120 sends this message on the dedicated control channel (DCCH) with the appropriate connection information. After updating the active set, the mobile terminal 100 confirms the update with the RRC "active set update complete" message.

The radio link is now added to the active set and is used for transmission and reception of radio signals. Some of the above steps may be left out if the new base station 115 is connected to the same network controller, i.e. the serving network controller (SRNC) 120, as the currently involved base station 115 or if the Iur interface to the drift network controller (DRNC) 125 already exists.

A cell update procedure may be triggered by a cell reselection function in the mobile terminal 100, which notifies which base station (or cell) e.g. base station 115, the mobile terminal 100 could switch. The cell update procedure may also be triggered by expiry of periodic cell update timer, initiation of uplink data transmission, UTRAN-originated paging and radio link failure in Cell_DCH state.

The mobile terminal 100 may switch to a base station 115, which is under control of a network controller different, i.e. a drift network controller (DRNC) 125 from the original network controller 120 serving the mobile terminal 100, i.e. the serving network controller (SRNC) 120.

The mobile terminal 100 may read broadcast information of the new base station (e.g. base station 115 herein). Subsequently, the RRC layer of the mobile terminal sends a "cell update" message to the serving network controller (SRNC) 120 via the common control (logical) channel (CCCH) and the random access (transport) channel (RACH). The transmission may include for instance the current U-RNTI (S-RNTI and the identity of the serving network controller (SRNC). Upon reception of the "cell update" message, the change of the base station (or cell) may be registered by the serving network controller (SRNC) 120 and in case the registration is successful, the serving network controller (SRNC) 120 replies with a "cell update confirm" message transmitted on the dedicated control (logical) channel (DCCH) and the forward access (transport) channel (FACH) to the mobile terminal 100. The "cell update confirm" message may include the current U-RNTI (S-RNTI and identity of the serving network controller (SRNC)) and further new C-RNTI and/or U-RNTI (S-RNTI and identify of the serving network controller). The "cell update confirm" message may also include a radio bearer release, radio bearer reconfiguration, transport channel reconfiguration or physical channel reconfiguration.

State transitions or state changes of the mobile terminal's connected mode is decided on a consideration or trade-off between terminal power consumption, service delay, signaling load and network resource utilization. When sending or receiving reasonable amount of data, the mobile terminal uses or will stay in Cell_DCH state but once the data runs out (and timers have elapsed) the mobile terminal will be moved from Cell_DCH state to for instance Cell_FACH state.

In case on mobile terminal-imitated change, where an application has created data to be transmitted to the network and the amount is such that using the Cell_FACH state and sending the data on random access channel (RACH) may be not sufficient but a dedicated channel (DCH) may be needed to be set up. A "cell update" message is initiated by the mobile terminal 100, which is confirmed by a "cell update confirm" message by the serving network controller (SRNC). After subsequent reception of a measurement report and a set up of a radio link between base station and serving network controller (SNRC), a reconfiguration message is sent on the forward access channel (FACH) to inform of the dedicated channel (DCH) parameters to be used.

The network initiated state change may occur, when there is too much downlink data to be transmitted, such that using the forward access channel (FACH) is not enough. The network controller (SRNC) may first transmit a paging message in the cell (by the base station), where the terminal is located (when the mobile terminal is in Cell_PCH state). Upon reception of the paging message, the mobile terminal may move to Cell_FACH state and initiate a "cell update" signaling on the random access channel (RACH) to the serving network controller (SRNC), which is responded by a "cell update confirm" message by the serving network controller (SRNC). Then, the mobile terminal may move to Cell_DCH state and respond with a reconfiguration in case of altered dedicated channel (DCH) parameters.

Together with the realization of the "enhanced Cell_FACH" operation, the mapping of the channels has been modified as described in detail above. Hence, it is immediately understood that the co-existence of network controllers (or radio network controllers, RNCs) being operable of "enhanced Cell_FACH" functionality and network controllers (or radio network controllers, RNCs) not being operable of "enhanced Cell_FACH" functionality will may be problematic from the point of interoperability in soft handover (SOH) inter-radio network controller cell update procedure with mobile terminals being operable of "enhanced Cell_FACH" functionality (cf. for instance 3GPP Tdoc R3-070278, "Solution on Iur Problem with pre-Re17 SRNC" presented on the 3GPP TSG-RAN WG3 Meeting #55 in St Louis, USA on 12 - 16 February 2007; or 3GPP Tdoc R2-074009, "Iur backward compatibility problem" presented on the 3GPP TSG-RAN-WG2 Meeting #59 in Shanghai, China on 8 - 12 October 2007 ).

In particular, an inconsistency in using the "enhanced Cell_FACH" functionality between an cell (or base station) and mobile terminal has been identified, if the serving network controller and the current/drift network controller (CRNC/DRNC) for the mobile terminal are located in different network entities, and if the serving network controller (SRNC) is not supporting "enhanced Cell_FACH" functionality while the current/drift network controller (CRNC/DRNC) supports "enhanced Cell_FACH" functionality.

In the 3GPP (Third Generation Partnership Project) release 7 specification (cf. Technical Specification TS 25.331 V7.6.0 (2007-09); 3rd Generation Partnership Project; Technical Specification Group Radio Access Network; Radio Resource Control (RRC); Protocol Specification; Release 7), the properties of the "enhanced Cell_FACH" functionality is defined.

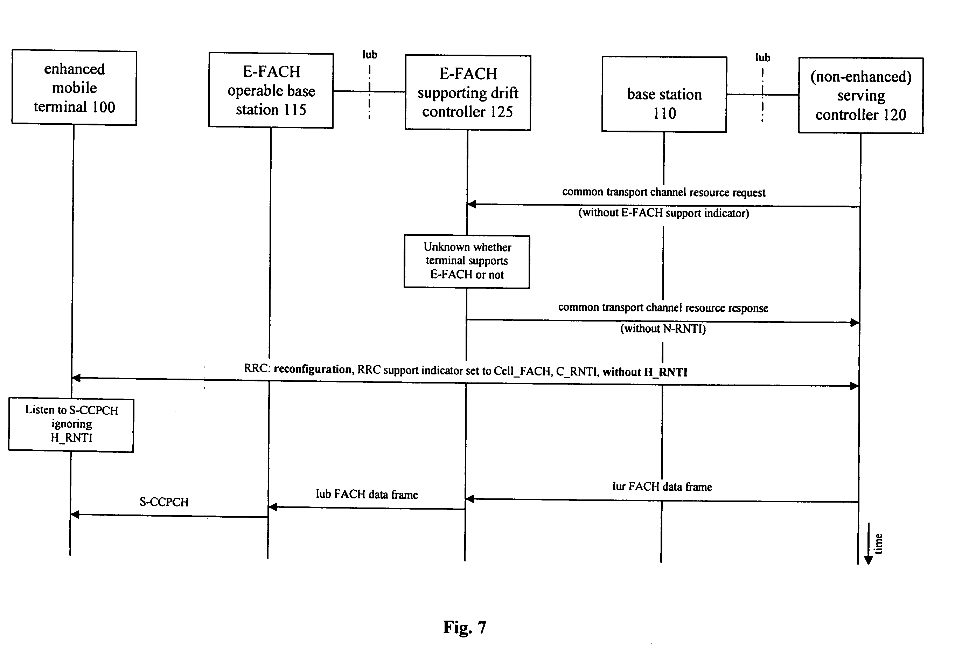

FIG. 7 illustrates a flow diagram illustrating a connected state transition procedure radio link addition procedure in an inter network controller soft handover procedure according to a first exemplary embodiment of the present invention. In particular, FIG. 7 illustrates a flow diagram illustrating a connected state transition procedure for instance from Cell_DCH to Cell_FACH state according to a first exemplary embodiment of the present invention.

The mobile terminal 100 should be assumed in connected Cell_DCH state and should be assumed to be operable of "Enhanced enhanced Cell_FACH" functionality. The ("non-enhanced") serving network controller (SRNC) 120 should be assumed to not support the "Enhanced enhanced Cell_FACH" functionality. The active set of the mobile terminal 100 includes at least one base station (or cell), which supports "Enhanced enhanced Cell_FACH" functionality, herein base station 115. This base station 115 (or cell) is controlled by a ("enhanced") drift network controller (DRNC) 125, which should be assumed to support "Enhanced enhanced Cell_FACH" functionality and the drift network controller (DRNC) 125 and the serving network controller (SRNC) 120 are connected via an Iur-interface, which is used for data transmission between them (not shown).

With a reconfiguration message, the serving network controller (SRNC) 120 may order the mobile terminal 100 to enter Cell_FACH state from the previous Cell_DCH state and with a reconfiguration message, the serving network controller (SRNC) 120 may request the mobile terminal 100 to select a specific base station (cell), herein base station 115, to camp on.

Now, two different cases should be considered.

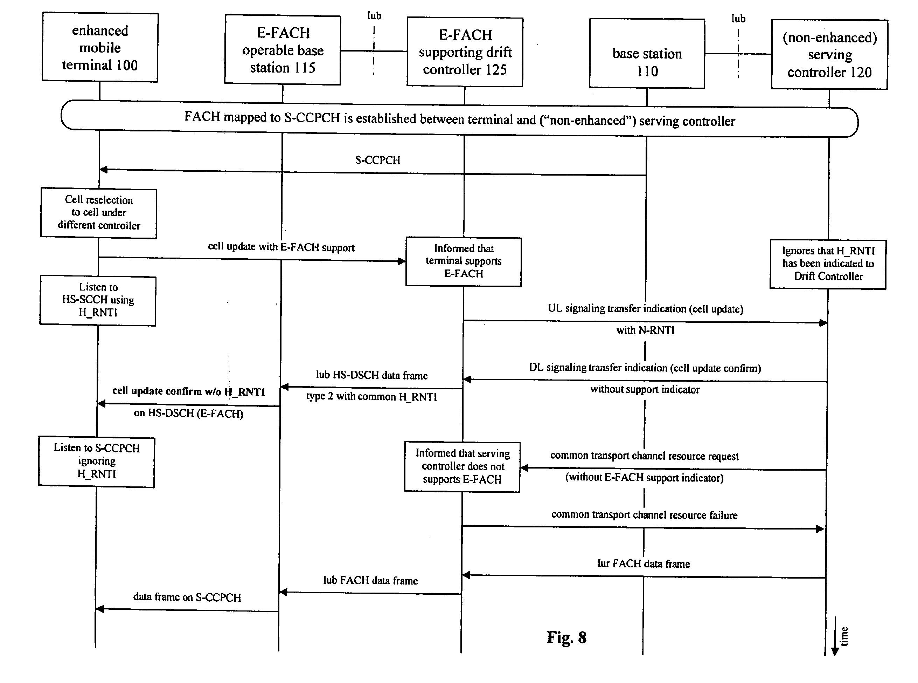

In the first case, If the mobile terminal 100 fails to select the ordered base station 115 (or cell) indicated by serving network controller (SRNC) 120 to camp on and the mobile terminal 100 is able to find another base station (or cell) to camp on, then the mobile terminal sends after cell selection a "cell update" message. In case the selected base station (or cell) supports "Enhanced enhanced Cell_FACH", i.e. if the network controller controlling the selected base station supports "Enhanced enhanced Cell_FACH", then the mobile station may unsuccessfully listen to high speed access channel, whereas data and/or control information are transmitted to the mobile terminal 100 on common control physical channel such as the secondary common control physical channel (S-CCPCH). A possible approach to overcome this problem will be discussed with reference to Fig. 8.

In the second case, the mobile terminal 100 may camp the base station 115 (or cell) indicated by serving network controller (SRNC) 120 after the transition of the connected state of the mobile terminal 100 from Cell_DCH to Cell_FACH,

The "Reconfiguration" response message is then directly transmitted to serving network controller (SRNC) 120. A "cell update" message is not sent and the mobile terminal 100 will hence monitor the HSDPA channels for receiving downlink data because of the "enhanced Cell_FACH" capability of the mobile terminal 100 and the drift network controller (DRNC) 125 controlling the base station 115, on which the mobile terminal 100 is clamped. The drift network controller (DRNC) 125 (or current network controller (CRNC) from the base station's/cell's point of view) does not know the capability of the mobile terminal 100 because the drift network controller (DRNC) 125 has not received any "cell update" message, which includes the capability of the mobile terminal from the mobile terminal 100. Moreover, because the serving network controller (SRNC) 120 does not support "Enhanced enhanced Cell_FACH" functionality (i.e. the serving network controller may be a 3GPP Pre-Release 7 radio network controller), the serving network controller (SRNC) 120 is further not capable to inform the drift network controller (DRNC) 125 about the capability of the mobile terminal 100, e.g. at setup of common resource over the Iur interface.

As a consequence thereof, the drift network controller (DRNC) 125 is not informed whether to send the downlink data to the mobile terminal 100 using the "Enhanced enhanced Cell_FACH" functionality or not, i.e. the secondary common control physical channel (S-CCPCH).

In order to overcome the aforementioned problem, the mobile terminal 100 receiving one of a "cell update confirm" message and "reconfiguration" message, which include the temporary identity relating an identity to be used with a high speed downlink channel, i.e. an H-RNTI information element, while state change is ordered by the serving network controller (SNRC) 120, should monitor the high speed downlink channel, i.e. high speed downlink packet access (HSDPA) channels in accordance with the "enhanced Cell_FACH" functionality, for the reception of data and/or control information using the temporary identity, in particular for the reception of data and/or control information on the dedicated control (logical) channel / dedicated traffic channel (DCCH/DTCH) mapped on the high speed downlink shared channel (HS-DSCH) using the H-RNTI.

The mobile terminal 100 receiving one of a "cell update confirm" message and "reconfiguration" message wile state change is ordered by the serving network controller (SNRC) 120, either of which does not include any temporary identity relating an identity to be used with a high speed downlink channel, i.e. any H-RNTI information element, while state change is ordered by the serving network controller (SNRC) 120, should monitor channel used by the serving network controller (SNRC) 120 not supporting "enhanced Cell_FACH" functionality, i.e. the secondary common control physical channel (S-CCPCH) as specified in 3GPP (Third Generation Partnership Project) pre-release 7 specifications for the reception of data and/or control information on the dedicated control (logical) channel /dedicated traffic channel (DCCH/DTCH) mapped thereon.

The "reconfiguration" message does not include an H-RNTI information element because the serving network controller (SRNC) 120 does not support "enhanced Cell_FACH". Consequently, the mobile terminal 100 configures for reception via the secondary common control physical channel (S-CCPCH).

Referring back to Fig. 7, any FACH data transmitted by the serving network controller (SRNC) 120 through the Iur interface from the serving network controller (SRNC) 120 through the drift network controller (DRNC) 125 and further through the Iub interface to the base station 115 is transmitted by the base station 115 via the secondary common control physical channel (S-CCPCH) to the mobile terminal 100, which listens thereto for reception of the FACH data.

Fig. 8 illustrates a flow diagram illustrating a radio link addition procedure in an inter network controller soft handover procedure cell update procedure according to a second exemplary embodiment of the present invention.

The mobile terminal 100 should be assumed in connected Cell_FACH state and should be assumed to be operable of "Enhanced enhanced Cell_FACH" functionality. The ("non-enhanced") serving network controller (SRNC) 120 should be assumed to not support the "Enhanced enhanced Cell_FACH" functionality.

The active set of the mobile terminal 100 includes at least one base station (or cell), which does not supports "Enhanced enhanced Cell_FACH" functionality, herein base station 110 controlled by the ("non-enhanced") serving network controller (SRNC) 120. This is the secondary common control physical channel (S-CCPCH) is used for forward access channel (FACH) downlink data transmissions.

After a cell re-selection procedure, the mobile terminal 100 should be assumed to camp on a base station 115 (or cell), which supports "enhanced Cell_FACH", i.e. this base station 115 (or cell) is controlled by a ("enhanced") drift network controller (DRNC) 125, which should be assumed to support "Enhanced enhanced Cell_FACH" functionality and the drift network controller (DRNC) 125 and the serving network controller (SRNC) 120 are connected via an Iur-interface, which is used for data transmission between them (not shown).

In order to inform radio access network (RAN) about the cell re-selection, the mobile terminal sends a radio resource control (RRC) "cell update" message to the drift network controller (DRNC) 125. This "cell update" message is send sent as common control (logical) channel (CCCH) message including a U-RNTI as identity of the mobile terminal 100. The "cell update" message is sent from the mobile terminal 100 through the base station 115 (or cell) and drift network controller (DRNC) 125 to the serving network controller (SRNC) 120.

As the mobile terminal 100 and the base station 115 support "Enhanced enhanced Cell_FACH" functionality, the mobile terminal 100 is configured to monitor the high speed downlink access (HSDPA) channels for a network response including "cell update confirm" or "cell update reject" message based on the principle above.

The serving network controller (SRNC) 120 should be assumed (to decide) to remain the "anchor" for the mobile terminal 100 without the execution of "serving network controller (SRNC) relocation" procedure; i.e. the response message to the "cell update" and other downlink data will be transmitted from the serving network controller (SRNC) 120 via the drift network controller (DRNC) 125 and the base station 115 (or cell) and further to the mobile terminal 100.

As the serving network controller (SRNC) 120 does not support "enhanced Cell_FACH" functionality, the mobile terminal is not enabled informing the drift network controller (DRNC) 125 about the capability of the mobile terminal 100.

As a consequence, the drift network controller (DRNC) 125 would send received FACH data through the Iur interface from serving network controller (SRNC) 120 to the base station 115 and the base station 115 would end the data using the secondary common control physical channel (S-CCPCH) to the mobile terminal 100 whereas the mobile terminal 100 would monitor the high speed downlink packet access (HSDPA) channels, i.e. the mobile terminal 100 may not receive any downlink FACH data.

In order to avoid the aforementioned problem, the serving network controller (SRNC) 120 may include a temporary identity relating an identity to be used with a high speed downlink channel, i.e. an H-RNTI information element, in a "cell update confirmation" message sent to the mobile terminal 100, which performs cell reselection. The serving network controller (SRNC) 120 may also include a temporary identity relating an identity to be used with a high speed downlink channel, i.e. an H-RNTI information element, in a "reconfiguration" message, when the serving network controller (SRNC) 120 orders the mobile terminal 100 to change its state (e.g. from Cell_DCH to Cell_FACH) in case the serving network controller (SRNC) and the base station support the "Enhanced enhanced CELLCell_FACH" functionality.

In case the serving network controller (SRNC) 120 or the base station 115 does not support the "Enhanced enhanced CELLCell_FACH" functionality, such a temporary identity relating an identity to be used with a high speed downlink channel, i.e. an H-RNTI information element, should not be included in a aforementioned "cell update confirmation" message or "reconfiguration" message.

Hence, the mobile terminal 100 receiving such formed messages is informed which channel should be listened to. In the exemplary embodiment shown in Fig. 8, an H-RNTI information element is not included in the "cell update confirmation" message sent from the serving network controller (SRNC) 120 to the mobile terminal 100. Upon reception of this "cell update confirmation" message without H-RNTI information element (which is received on the high speed downlink packet access (HSDPA) channel used by the base station 115 of the drift network controller (DRNC) 125 for sending the "cell update confirmation" message), the mobile terminal reconfigures to listen on the secondary common control physical channel (S-CCPCH).

Moreover, the serving network controller (SRNC) 120 through which the "cell update confirmation" message without H-RNTI information element is sent to the mobile terminal 100is informed that the serving network controller (SRNC) 120 does not support "Enhanced enhanced CELLCell_FACH" functionality and is aware that the mobile terminal 100 has also been informed accordingly.

Hence, any FACH data transmitted by the serving network controller (SRNC) 120 through the Iur interface from the serving network controller (SRNC) 120 through the drift network controller (DRNC) 125 and further through the Iub interface to the base station 115 is transmitted by the base station 115 via the secondary common control physical channel (S-CCPCH) to the mobile terminal 100, which listens thereto for reception of the FACH data.

An indication of a "resource failure" by the drift network controller (DRNC) 125 to the serving network controller (SRNC) 120 is avoided. A release RRC connection for the mobile terminal listening to the high speed downlink shared channel (HS-DSCH) due to the base station sending on the secondary common control physical channel (S-CCPCH) is avoided.

In principle the aforementioned measures can be summarized as following:
(a) A mobile terminal shall include its capability about the support of "enhanced Cell-_FACH" functionality, i.e. the use of high speed channel, in a "connection setup request". In accordance with the 3GPP (Third Generation Partnership Project) release 7 specification, the UE's capability on the support of the high speed physical downlink shared channel (HS-PDCSH) in Cell_FACH state should be included in the radio resource control (RRC) "connection setup request" message indicating the support of "enhanced Cell_FACH" functionality.
(b) The serving network controller (SRNC) should include a temporary identity relating an identity to be used with a high speed downlink channel in a "cell update confirmation update" message sent to the mobile terminal, which performs cell reselection, in case the serving network controller (SRNC) and the drift network controller (DRNC) support the "enhanced Cell_FACH" functionality and as well as the base station under control of the drift network controller operates support the "Enhanced enhanced CELLCell_FACH" functionality.
   The serving network controller (SRNC) should also include a temporary identity relating an identity to be used with a high speed downlink channel in a "reconfiguration" message, when the serving network controller (SRNC) orders a mobile terminal to change its state (e.g. from Cell_DCH state to Cell_FACH state) in case the serving network controller (SRNC) and the drift network controller (DRNC) support the "enhanced Cell_FACH" functionality as well as and the base station support under control of the drift network controller operates the "Enhanced enhanced CELLCell_FACH" functionality.
   In case the serving network controller (SRNC) or the base station, over which the serving network controller (SRNC) exercise control, does not support "Enhanced enhanced CELLCell_FACH" functionality, the temporary identity relating an identity to be used with a high speed downlink channel should not be included in the aforementioned messages.
   In accordance with the 3GPP (Third Generation Partnership Project) release 7 specification, the serving radio network controller (SRNC) should include an H-RNTI in a RRC "Cell Update Confirmation Update" sent to the UE, which performs cell reselection,
   and/or
   the serving radio network controller (SRNC) should include an H-RNTI in a RRC "Reconfiguration" message, when the serving radio network controller (SRNC) orders the UE to change its state (e.g. from Cell_DCH state to Cell_FACH state) in case that the serving radio network controller (SRNC) and the cell controlled thereby support "Enhanced enhanced CELLCell_FACH" functionality.
   Otherwise, an H-RNTI should not be included in the aforementioned messages
(c) In case the mobile terminal receives one of a "cell update confirm" message and "reconfiguration" message which order the state change/transition including the temporary identity relating an identity to be used with a high speed downlink channel while state change is ordered, the mobile terminal should monitor the high speed downlink channel for the reception of data and/or control information using the temporary identity relating an identity to be used with a high speed downlink channel.
   Otherwise, i.e. the temporary identity relating an identity to be used with a high speed downlink channel is not included in one of the aforementioned messages, the mobile terminal should listens to the ("default") channel, which is used when "enhanced Cell_FACH" functionality is not supported.
   In accordance with the 3GPP (Third Generation Partnership Project) release 7 specification, in case the UE operable for "Enhanced enhanced FACH" functionality receives an RRC "Cell Update Confirm" or an RRC "Reconfiguration" message orders state change/transition, which include an H-RNTI information element while state change is ordered, then the UE shall monitor the high speed downlink packet access (HSDPA) channels for the reception of data and/or control information on the dedicated control (logical) channel / dedicated traffic channel (DCCH/DTCH) using the H-RNTI information element.
   Otherwise, i.e. when an H-RNTI information element is not included in one of the aforementioned RRC messages, the UE should listens to the secondary common control physical channel (S-CCPCH) (i.e. "default" channel) as specified in 3GPP (Third Generation Partnership Project) pre-release 7 specifications.
(d) A mobile terminal operable of "enhanced Cell-_FACH" functionality, which is in Cell_FACH state, Cell_PCH state or URA_PCH state, should monitor the high speed downlink packet access (HSDPA) channels to receive data and/or control information on control or paging channels, on which the support of the "Enhanced enhanced Cell_FACH" functionality of the base station can be obtained from a broadcast of system information.
   In accordance with the 3GPP (Third Generation Partnership Project) release 7 specification, the UE, which supports "Enhanced enhanced Cell_FACH" functionality and which is in one or the UTRAN connected states including Cell_FACH state, Cell_PCH state and URA_PCH state, should (always) monitor the high speed downlink packet access (HSDPA) channels to receive data and/or control information on the common control (logical) channel / paging (logical) channel (CCCH/PCCH) giving the cell's support of the "Enhanced enhanced Cell_FACH" functionality from RRC "System Information Broadcast" message.

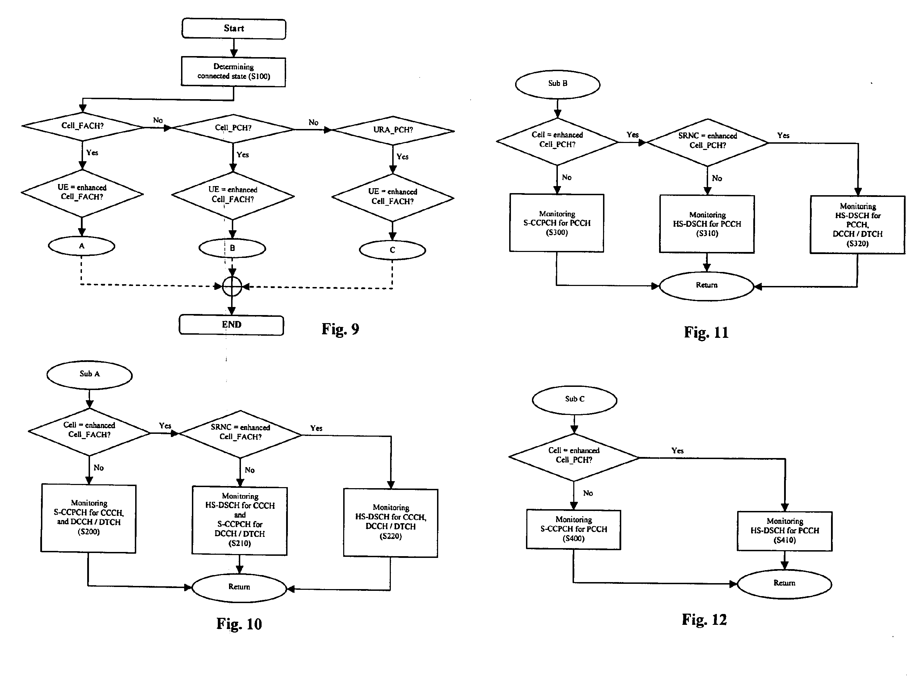

Figs. 9 to 12 illustrate schematically a chart diagram illustrating schematically decision flow according to an exemplary embodiment of the present invention.

In an operation S 100, the connected state is determined and it is determined whether "enhanced Cell_FACH" functionality is supported in the respective connected state.

In case the mobile terminal (UE) is in Cell_FACH connected state and supports "enhanced Cell_FACH" functionality the sequence braches to sub sequence A (cf. Fig. 10).

In an operation S220, in case both the base station (cell) and the serving network controller (SRNC), on which the mobile terminal (UE) is clamped, support the "enhanced Cell_FACH" functionality, and the base station (cell) operates the "enhanced Cell_FACH" functionality, the mobile terminal (UE) monitors high speed downlink packet access (HSDPA) channels to receive downlink data for common control (logical) channel (CCCH) and dedicated control (logical) channel / dedicated traffic channel (DCCH/DTCH).

In an operation S210, in case the base station (cell) supports operates the "enhanced Cell_FACH" functionality but the serving network controller (SRNC), on which the mobile terminal (UE) is clamped, does not support the "enhanced Cell_FACH" functionality, then mobile terminal (UE) monitors high speed downlink packet access (HSDPA) channels to receive downlink data for common control (logical) channel (CCCH) in case the mobile terminal (UE) does not have a valid C-RNTI and mobile terminal (UE) monitors secondary common control physical channel (S-CCPCH) to receive data for dedicated control (logical) channel / dedicated traffic channel (DCCH/DTCH) as specified in 3GPP (Third Generation Partnership Project) release 99 specification in case mobile terminal (UE) has valid C-RNTI.

In an operation S210, in case the base station (cell) does not support operate the "enhanced Cell_FACH" functionality, then the mobile terminal (UE) monitors secondary common control physical channel (S-CCPCH) to receive downlink data for common control (logical) channel / dedicated control (logical) channel / dedicated traffic channel (CCCH/DCCH/DTCH).

In case the mobile terminal (UE) is in Cell_PCH connected state and supports "enhanced Cell_FACH" functionality (including "enhanced Cell_PCH" functionality) the sequence braches to sub sequence B (cf. Fig. 11).

In an operation S320, in case both the base station (cell) and the serving network controller (SRNC) support the "enhanced CELLCell_PCH" functionality and the base station (cell) operates the "enhanced Cell_PCH" functionality, then the mobile terminal (UE) monitors HSDPA channels to receive downlink data for paging (logical) channel (PCCH) and dedicated control (logical) channel / dedicated traffic channel (CCCH/DCCH/DTCH).

In an operation S310, in case the base station (cell) supports operates the "enhanced Cell_PCH" functionality but the serving network controller (SRNC), on which the mobile terminal (UE) is clamped, does not support the "enhanced Cell_PCH" functionality, then mobile terminal (UE) monitors high speed downlink packet access (HSDPA) channels to receive downlink data for paging.

In an operation S300, in case the base station (cell) does not support operate the "enhanced Cell_PCH" functionality, then the mobile terminal (UE) monitors secondary common control physical channel (S-CCPCH) to receive DL data for paging (logical) channel (PCCH) as specified in 3GPP (Third Generation Partnership Project) release 99 specification.

In case the mobile terminal (UE) is in URA_PCH connected state and supports "enhanced Cell_FACH" functionality (including "enhanced Cell_PCH" functionality) the sequence braches to sub sequence C (cf. Fig. 12).

In an operation S410, in case the base station (cell) supports operates the "enhanced Cell_PCH" functionality, then the mobile terminal (UE) monitors high speed downlink packet access (HSDPA) channels to receive downlink data for paging.

In an operation S410, in case the base station (cell) does not support operate the "enhanced Cell_PCH" functionality, then the mobile terminal (UE) monitors secondary common control physical channel (S-CCPCH) to receive downlink data for paging as specified in 3GPP (Third Generation Partnership Project) release 99 specification.

Those skilled in the art will understand from the above description that although the invention has been described with reference to Figs. 7 and 8 in the context of enhanced Cell-FACH state, the concept is not limited thereto. As explained in detail above, the concept also considers enhanced Cell_PCH / enhanced Cell_RACH state and is operable therewith.

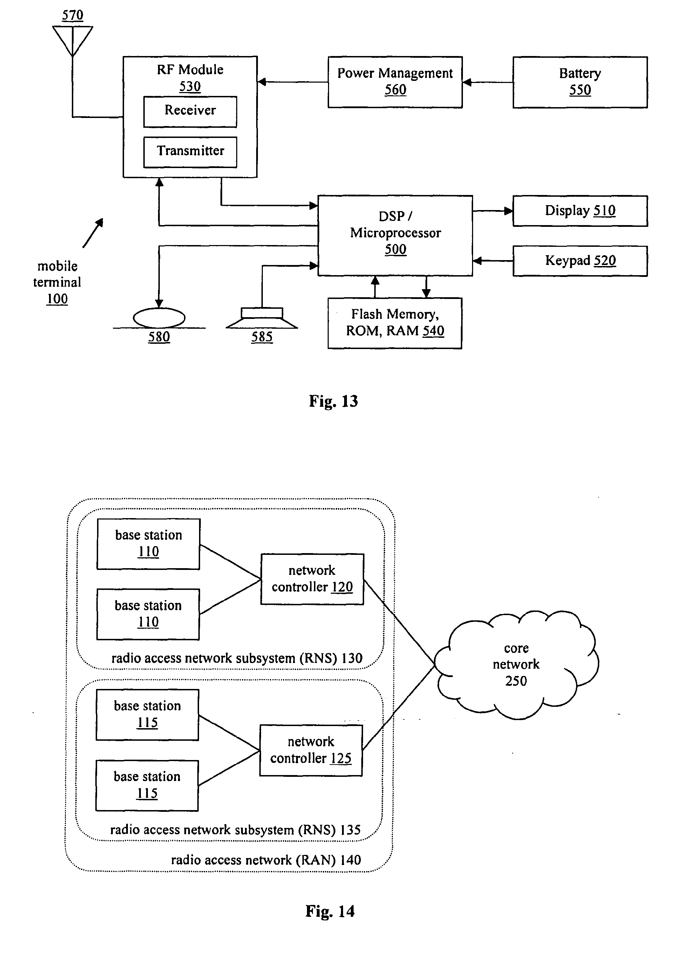

Referring to Fig. 13, a block diagram of a mobile communication device 100 according to an exemplary embodiment of the present invention is illustrated schematically; for example a mobile or cellular phone for performing the methods of the present invention. The mobile communication device 100 may for instance include a processing unit 500 such as a general purpose microprocessor, a microcontroller, an application specific integrated circuit (ASIC), digital signal processor or any combination thereof. The mobile communication device 100 may for instance further include, an RF module 530 having a receiver and a transceiver part, a power management module 560, an antenna 570, a battery 550, a display 510, a keypad 520, a storage unit 540 such as flash memory, ROM or RAM, SRAM, etc, a speaker 585 and a microphone 580.

A user may enter instructional information, such as a telephone number, for example, by pushing the buttons of the keypad 520 or by voice activation using the microphone 580. The processing unit 500 receives and processes the instructional information to perform the appropriate function, such as to dial the telephone number. Operational data may be retrieved from the memory unit 540 to perform the function. Furthermore, the processing unit 500 may display the instructional and operational information on the display 510 for the user's reference and convenience.

The processing unit 500 issues instructional information to the RF (radio frequency) module 530, to initiate communication by transmitting radio frequency signals comprising, for example, voice communication data. The RF module 530 includes the receiver and the transmitter to receive and transmit radio signals from and to the radio access network (RAN) of the public land mobile network (PLMN). The antenna 570 facilitates the transmission and reception of radio signals. Upon receiving radio signals, the RF module 530 may forward and convert the signals to baseband frequency for processing by the processing unit 500. The processed signals may be transformed into audible or readable information output, for example, via the speaker 585.

The RF module 530 and antenna 570 are adapted to receive an information message from the public land mobile network (PLMN) and to transmit a message to the public land mobile network (PLMN) and the storage unit 540 is adapted to store information associated with one or more configurations. The processing unit 500 is adapted to process an information message indicating one or more available configurations for transmitting a message, select one of the available configurations and transmit a message utilizing the selected configuration.

It will be apparent to one skilled in the art that the preferred embodiments of the present invention can be readily implemented using, for example, the processor 500 or other data or digital processing device, either alone or in combination with external support logic.

In particular, the mobile terminal 100 may comprise a component operable for determining, whether the resource control message includes a temporary identity relating to an identity to be used with the one or more high speed downlink channels. The component operable for determining may be a component for parsing messages in particular (RRC) "reconfiguration" and "cell update confirm" messages sent from a network controller. The mobile terminal 100 may further comprise component operable for reconfiguring the transceiver of the mobile terminal to listen on a physical control channel and to receive at least control information sent by the first controlling network entity on the physical control channel in case the aforementioned temporary identity misses. The mobile terminal 100 may also comprise component operable for maintaining a configuration of the transceiver to listen on the one or more high speed download channels using the temporary identity.

Fig. 14 illustrates a block diagram of a radio access network (RAN) 140 such as for example an UTRAN (UMTS radio access network) according to an exemplary embodiment of the present invention. The radio access network 140 includes for instance one or more radio access network sub-systems (RNS) 130, 135. Each radio access network sub-system (RNS) 130, 135 may further include a radio network controller (RNC) 120, 125 and a plurality of base stations 110, 115, or NodeBs, managed by the respective radio network controller (RNC) 120, 125. The radio network controller (RNC) 120, 125 handles the assignment and management of radio resources and operates as an access point with respect to the core network 250. Furthermore, the radio network controller (RNC) 120, 125 is adapted to perform the methods of the present invention.

The base stations 110, 115 receive information sent by the physical layer of a mobile terminal 100 through an uplink and transmit data to the mobile terminal through a downlink. The base stations 110, 115 operate as access points, or as a transmitter and receiver, of the radio access network 140 for a mobile terminal 100. The base stations 110, 115 are adapted to transmit an information message to one or more mobile terminals 100 and to receive a message from one or more mobile terminals.

The radio access network 140 is adapted to generate an information message, the information message indicating one or more available configurations for transmitting a message, and process a message from one or more mobile terminals 100, the message transmitted utilizing one of the available configurations.

Although the present invention is described in the context of mobile communication, the present invention may also be used in any wireless communication systems using mobile devices, such as PDAs and laptop computers equipped with wireless communication capabilities. Moreover, the use of certain terms to describe the present invention should not limit the scope of the present invention to certain type of wireless communication system, such as UMTS. The present invention is also applicable to other wireless communication systems using different air interfaces and/ or physical layers, for example, TDMA, CDMA, FDMA, WCDMA, etc.

In particular, the radio network controller may comprise a component operable for generating the resource control message including among others (RRC) "reconfiguration" and "cell confirm update" messages. The network interface, in particular, the Iub interface or Iur interface, is operable for operable for sending the resource control message.

In exemplary embodiments the present invention may be implemented as a method, apparatus or article of manufacture using standard programming and/ or engineering techniques to produce software, firmware, hardware, or any combination thereof. The term "article of manufacture" as used herein refers to code or logic implemented in hardware logic (e. g., an integrated circuit chip, Field Programmable Gate Array (FPGA), Application Specific Integrated Circuit (ASIC), etc.) or a computer readable medium (e.g., magnetic storage medium (e. g., hard disk drives, floppy disks, tape, etc.), optical storage (CD-ROMs, optical disks, etc.), volatile and non-volatile memory devices (e. g., EEPROMs, ROMs, PROMs, RAMs, DRAMs, SRAMs, firmware, programmable logic, etc.).

Code in the computer readable medium is accessed and executed by a processor. The code in which exemplary embodiments are implemented may further be accessible through a transmission media or from a file server over a network. In such cases, the article of manufacture in which the code is implemented may comprise a transmission media, such as a network transmission line, wireless transmission media, signals propagating through space, radio waves, infrared signals, etc. Of course, those skilled in the art will recognize that many modifications may be made to this configuration without departing from the scope of the present invention, and that the article of manufacture may comprise any information bearing medium known in the art.

The logic implementation shown in the figures described specific operations as occurring in a particular order. In alternative implementations, certain of the logic operations may be performed in a different order, modified or removed and still implement preferred embodiments of the present invention. Moreover, steps may be added to the above described logic and still conform to implementations of the invention.

In general, From from the forgoing description, it will be apparent that modifications can be made to the system without departing from the teaching of the present invention.

Accordingly, the scope of the invention is only to be limited as necessarily by the accompanying claims.

## Claims

1. Mobile terminal, comprising:
a transceiver operable for receiving a resource control message through a code division multiple access technology based network from a first controlling network entity via a second controlling network entity, wherein the second controlling network entity uses one or more high speed downlink channels for sending the resource control message to the mobile terminal;
a component operable for determining, whether the resource control message includes a temporary identity relating to an identity to be used with the one or more high speed downlink channels; and in case the temporary identity misses, reconfiguring the transceiver of the mobile terminal to listen on a physical control channel and to receive at least control information sent by the first controlling network entity on the physical control channel.

2. Mobile terminal according to claim 1, comprising:
a component operable for maintaining a configuration of the transceiver to listen on the one or more high speed download channels using the temporary identity.

3. Mobile terminal according to claim 1 or claim 2, wherein a change of a connected state to Cell_FACH of the mobile terminal is performed or wherein the connected state of the mobile terminal is maintained in Cell_FACH.

4. Mobile terminal according to anyone of the claim 1 to 3, comprising
a confirmation response for being retransmitted to the first controlling network entity.

5. Mobile terminal according to anyone of the claims 1 to 4, wherein the mobile terminal is clamped on the second controlling network entity.

6. Mobile terminal according to anyone of the claims 1 to 5, wherein the resource control message originates from the first controlling network entity.

7. Mobile terminal according to anyone of the claim 1 to 6, wherein the resource control message includes at least one of a "cell update confirm" message and a "reconfiguration" message.

8. Mobile terminal according to anyone of the claims 1 to 7, wherein the physical control channel is a secondary common control physical channel and the one or more high speed downlink channels are one or more high speed downlink packet access channels.

9. Controlling network entity, comprising:
a component operable for generating the a resource control message, wherein a temporary identity relating to an identity to be used with the one or more high speed downlink channels is included into the resource control message if the controlling network entity supports one or more high speed downlink channels for sending the resource control message to a mobile terminal; and the temporary identity is omitted if the controlling network entity does not supports the one or more high speed downlink channels; and
a network interface operable for sending a the resource control message through a code division multiple access technology based network via another controlling network entity to the mobile terminal; wherein the other controlling network entity uses the one or more high speed downlink channels for sending the resource control message to the mobile terminal.

10. Controlling network entity according to claim 9, wherein the resource control message orders the mobile terminal to change its connected state to Cell_FACH state of the connected state of the mobile terminal is maintained in Cell_FACH state.

11. Controlling network entity according to claim 9 or claim 10, wherein the controlling network entity and/or the other controlling network entity are radio network controllers.

12. Controlling network entity according to anyone of the claims 9 to 11, wherein the controlling network entity is a serving controlling network entity.

13. Controlling network entity according to anyone of the claim 9 to 12, wherein the resource control message includes at least one of a "cell update confirm" message and a "reconfiguration" message.

14. Method [mobile terminal], comprising:
receiving a resource control message through a code division multiple access technology based network from a first controlling network entity via a second controlling network entity by a mobile terminal, wherein the second controlling network entity uses one or more high speed downlink channels for sending the resource control message to the mobile terminal;
determining, whether the resource control message includes a temporary identity relating to an identity to be used with the one or more high speed downlink channels; and
in case the temporary identity misses, reconfiguring to the mobile terminal to listen on a physical control channel and to receive at least control information sent by the first controlling network entity on the physical control channel.

15. Method according to claim 14, comprising:
in case the temporary identity is included, maintaining listening on the one or more high speed download channels using the temporary identity.

16. Method according to claim 14 or claim 15, comprising:
performing a change of a connected state of the mobile terminal to Cell_FACH state; or
maintaining the connected state of the mobile terminal in Cell_FACH state.

17. Method according to anyone of the claims 14 to 16, comprising:
retransmitting a confirmation response to the first controlling network entity.

18. Method according to anyone of the claims 14 to 17, wherein the mobile terminal is clamped on the second controlling network entity.

19. Method according to anyone of the claims 14 to 18, wherein the resource control message originates from the first controlling network entity.

20. Method according to anyone of the claims 14 to 19, wherein the first controlling network entity and/or the second controlling network entity manage radio resources of the code division multiple access technology based network.

21. Method according to anyone of the claims 14 to 20, wherein the resource control message includes at least one of a "cell update confirm" message and a "reconfiguration" message.

22. Method [controlling network entity], comprising:
generating the a resource control message, wherein a temporary identity relating to an identity to be used with the one or more high speed downlink channels is included into the resource control message if the controlling network entity supports one or more high speed downlink channels for sending the resource control message to the mobile terminal; and the temporary identity is omitted if the controlling network entity does not supports the one or more high speed downlink channels; and
sending the resource control message through a code division multiple access technology based network via another controlling network entity to a mobile terminal; wherein the other controlling network entity uses the one or more high speed downlink channels for sending the resource control message to the mobile terminal.

23. Method according to claim 22, comprising
ordering the mobile terminal to change its connected state by the resource control message in Cell_FACH state, or
maintaining the connected state of mobile terminal in Cell_FACH state.

24. Method according to claim 22 or claim 23, wherein the controlling network entity and/or the other controlling network entity are radio network controllers.

25. Method according to anyone of the claims 22 to 24, comprising:
anchoring the mobile terminal to the controlling network entity.

26. Method according to anyone of the claims 22 to 24, wherein the controlling network entity is a serving controlling network entity.

27. Method according to anyone of the claim 22 to 25, wherein the resource control message includes at least one of a "cell update confirm" message and a "reconfiguration" message.

28. Computer program product comprising program code sections, which when run on a processing enabled apparatus carry out the method according to anyone of the claims 14 to 27.

29. System, comprising:
a code division multiple access technology based network;
a first network controlling entity having
a component operable for generating a resource control message, wherein a temporary identity relating to an identity to be used with the one or more high speed downlink channels is included into the resource control message if the second controlling network entity supports one or more high speed downlink channels for sending the resource control message to a mobile terminal; and
the temporary identity is omitted if the controlling network entity supports only a physical control channel for sending the resource control message to the mobile terminal; and
a network interface operable for sending a the resource control message through a code division multiple access technology based network via a second controlling network entity to a mobile terminal; wherein the other controlling network entity uses one or more high speed downlink channels for sending the resource control message to the mobile terminal; and
the terminal device, having
a transceiver operable for receiving the resource control message through the code division multiple access technology based network from the first controlling network entity via the second controlling network entity;
a component operable for determining, whether the resource control message includes the temporary identity; and in case the temporary identity misses, reconfiguring the transceiver of the mobile terminal to listen on a physical control channel and to receive at least control information sent by the first controlling network entity on the physical control channel.
